# FASCICULE DE BREVET EUROPEEN

(11) **EP 3 875 340 B1**
(45) Date de publication et mention de la délivrance du brevet: **13.07.2022**
(21) Numéro de dépôt: 21160392.3
(22) Date de dépôt: 03.03.2021
(51) Int. Cl.: B61D 37/00

(54) **VEHICULE DE TRANSPORT EN COMMUN**
FAHRZEUG FÜR DEN PERSONENNAHVERKEHR
PUBLIC TRANSPORT VEHICLE

(30) Priorité: 05.03.2020 FR 2002237
(43) Date de publication de la demande: 08.09.2021
(73) Titulaire: SpeedInnov, 75008 Paris (FR)
(72) Inventeur: LANOE, Stéphane, 17000 La Rochelle (FR)
(74) Mandataire: Lavoix

(56) Documents cités:
- CN-Y- 201 151 397
- US-A- 1 491 234
- GRAB H: "MCDONALD'S-UMBAUSPEISEWAGEN BEI DER DEUTSCHEN BAHN AG", ZE VRAIL - GLASERS ANNALEN: ZEITSCHRIFT FUER DAS GESAMTE SYSTEM BAHN, GEORG SIEMENS VERLAG GMBH & CO. KG, DE, vol. 118, no. 11/12, 1 novembre 1994 (1994-11-01), page 484, XP000481477, ISSN: 0941-0589

## Description

La présente invention concerne un véhicule de transport en commun.

De nombreux véhicules de transport en commun comportent des compartiments de vente ou de restauration dans lesquels les passagers peuvent se procurer de la nourriture ou d'autres types d'objets auprès d'un ou plusieurs vendeurs. Un tel véhicule est par exemple décrit dans le document CN 201151397 Y.

Toutefois, la présence d'un vendeur limite le nombre d'achats qui peuvent être effectués pendant une période de temps donnée, puisque tout achat doit être traité par le vendeur et dépend donc de la disponibilité et de l'efficacité de celui-ci. Il a donc été proposé des compartiments de vente dépourvus de vendeur, dans lesquels les usagers peuvent effectuer les opérations de paiement relatives à l'achat des objets de leur choix auprès d'appareils de paiement accessibles en libre-service. Ces appareils peuvent être disponibles en plusieurs exemplaires, ce qui augmente le nombre d'opérations de vente qui peuvent être effectuées pendant une même période de temps.

Cependant, l'absence de vendeur entraîne un certain nombre de complications. Tout d'abord, puisque les usagers ne sont pas supervisés et ont accès aux objets à vendre, les risques de vol sont augmentés.

En outre, l'absence de supervision peut causer une désorganisation importante, les passagers pouvant se déplacer de manière aléatoire dans l'espace de vente. Cette désorganisation est susceptible de gêner la circulation des passagers et plus généralement l'efficacité des achats, puisque des passagers qui ont terminé la sélection des produits à acheter et qui sont donc prêts à effectuer l'achat auprès des appareils de vente peuvent être bloqués dans leur déplacement par des passagers qui sont eux encore en train de sélectionner les objets qu'ils désirent ou qui arrivent dans l'espace de vente. Du fait de ces gênes, le temps moyen passé par les passagers dans l'espace de vente est relativement élevé.

Cela est d'autant plus marqué que l'espace disponible à l'intérieur des véhicules de transport en commun est en général limité, et que les risques que des passagers se gênent mutuellement ou que leurs trajectoires se croisent sont élevés.

En conséquence, il existe un besoin pour un véhicule de transport en commun comportant un espace de vente, qui permette de limiter le temps de séjour des passagers dans l'espace de vente tout en limitant les risques de vol.

A cet effet, il est proposé un véhicule de transport en commun comportant un compartiment de vente s'étendant selon une direction longitudinale, le compartiment de vente comportant une zone de vente, une zone d'accès et une zone intermédiaire, la zone intermédiaire étant interposée selon la direction longitudinale entre la zone de vente et la zone d'accès, la zone de vente comprenant un ensemble de présentoirs prévus pour accueillir des objets destinés à être vendus, chaque objet comportant une étiquette propre à recevoir un premier signal radiofréquence et à émettre en réponse un deuxième signal radiofréquence, la zone intermédiaire comportant une cloison s'étendant selon la direction longitudinale, la zone intermédiaire comportant un premier passage et un deuxième passage décalés l'un par rapport à l'autre selon une direction transversale du compartiment de vente, chacun du premier et du deuxième passage reliant la zone d'accès à la zone de vente, la cloison séparant le premier passage du deuxième passage selon la direction transversale, la cloison comportant un dispositif de détection configuré pour émettre le premier signal et pour commander l'émission d'un signal à destination d'un utilisateur lorsque le dispositif de détection reçoit le deuxième signal émis par un des objets.

Selon des modes de réalisation particuliers, le véhicule présente une ou plusieurs des caractéristiques suivantes, prise(s) isolément ou selon toutes les caractéristiques techniquement possibles :
- la cloison présente une première extrémité et une deuxième extrémité délimitant la cloison selon la direction longitudinale, la première extrémité étant en regard de la zone d'accès, la deuxième extrémité étant en regard de la zone de vente, le dispositif de détection étant disposé à la première extrémité de la cloison.
- le premier passage comporte au moins un appareil de vente configuré pour permettre à un usager d'effectuer un paiement correspondant à l'achat d'un objet de la zone de vente.
- chaque appareil de vente est interposé longitudinalement entre le dispositif de détection et la deuxième extrémité de la cloison.
- chaque appareil de vente est configuré pour désactiver l'étiquette d'un objet suite à l'achat de l'objet par un passager.
- la cloison présente une hauteur supérieure ou égale à 1700 millimètres, l'une au moins des propriétés suivantes étant vérifiée :
   - la cloison est opaque, ou
   - la cloison est translucide.
- le premier passage est délimité selon la direction transversale par une paroi latérale du compartiment de vente et par la cloison, une distance entre la cloison et la paroi latérale, mesurée selon la direction transversale, étant comprise entre 40 pourcents et 60 pourcents d'une largeur du compartiment de vente.
- le premier passage est délimité selon la direction transversale par une paroi latérale du compartiment de vente et par la cloison, une distance entre la cloison et la paroi latérale, mesurée selon la direction transversale, étant comprise entre 750 millimètres et 950 millimètres.
- une longueur de la cloison, mesurée selon la direction longitudinale, est comprise entre 1,5 mètre et 2 mètres.

Des caractéristiques et avantages de l'invention apparaîtront à la lecture de la description qui va suivre, donnée uniquement à titre d'exemple non limitatif, et faite en référence au dessin annexé, sur lequel :

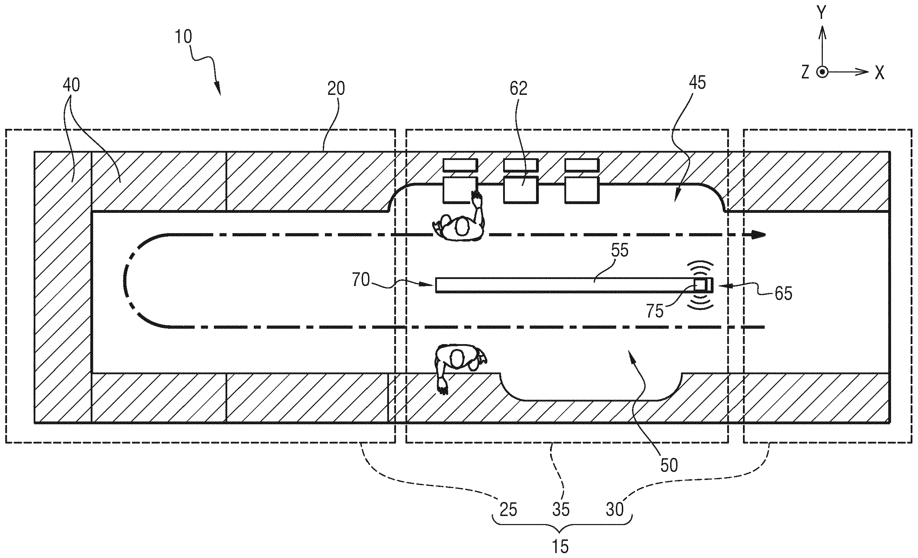

[Fig 1] la figure unique est une représentation schématique partielle en coupe vue d'en haut d'un véhicule selon l'invention.

Une véhicule 10 est représenté partiellement sur la figure 1.

Le véhicule 10 est un véhicule de transport en commun, par exemple une voiture ferroviaire, un avion, un navire, ou encore un train composé de plusieurs voitures ferroviaires reliées les unes aux autres.

Le véhicule 10 comporte un compartiment de vente 15 délimité par deux parois latérales 20.

Le compartiment de vente 15 s'étend selon une direction longitudinale X. Le compartiment de vente occupe, par exemple, la totalité du véhicule 10 lorsque le véhicule 10 est une voiture ferroviaire, ou occupe en totalité un étage d'une telle voiture. Dans ces cas, la direction longitudinale X est, par exemple, une direction longitudinale du véhicule 10.

Le compartiment de vente 15 est délimité selon une direction transversale Y par les deux parois latérales 20, qui séparent le compartiment de vente 15 de l'extérieur du véhicule 10. La direction transversale Y est, par exemple, une direction horizontale lorsque le véhicule 10 est en fonctionnement.

Le compartiment de vente 15 est configuré pour permettre à des passagers du véhicule d'acheter des objets mis à disposition des passagers dans le compartiment de vente 15.

Le compartiment de vente 15 comporte une zone de vente 25, une zone d'entrée 30 et une zone intermédiaire 35 interposée entre la zone d'entrée 30 et la zone de vente 25 selon la direction longitudinale X.

Le compartiment de vente 15 présente une longueur, mesurée selon la direction longitudinale X, comprise entre 9 mètres (m) et 12 m.

Le compartiment de vente 15 présente une largeur, mesurée selon la direction transversale Y, comprise entre 2,30 mètres (m) et 3,50 m, de préférence entre 2,30 m et 2,80 m.

La zone de vente 25 est configurée pour accueillir un ensemble d'objets à vendre et pour mettre les objets à vendre à disposition des passagers du véhicule 10. Par exemple, la zone de vente 25 comporte un ensemble de présentoirs 40, notamment d'étagères, configurés pour accueillir les objets à vendre.

Les présentoirs 40 sont, par exemple, disposés le long d'une périphérie de la zone de vente 25, notamment le long des parois, telles que les parois latérales 20 délimitant la zone de vente 25.

De manière connue en soi, chaque objet à vendre comporte une étiquette radiofréquence propre à recevoir un premier signal radiofréquence et à émettre en réponse un deuxième signal radiofréquence.

L'étiquette comporte, par exemple, une antenne configurée pour recevoir le premier signal et pour générer à partir du premier signal un courant électrique d'alimentation d'une puce électronique, la puce électronique générant lorsqu'elle est alimentée le deuxième signal à destination d'un dispositif externe à l'étiquette. De telles étiquettes permettent notamment à ce dispositif externe de détecter la présence de l'objet à proximité lorsque le dispositif externe reçoit le deuxième signal.

Il est entendu par « signal radiofréquence » un signal comportant au moins une onde électromagnétique radiofréquence. Les ondes électromagnétiques radiofréquences, également dénommées ondes radioélectriques, sont les ondes électromagnétiques dont la fréquence est comprise entre 3 KiloHertz (KHz) et 3 GigaHertz (GHz).

De telles étiquettes sont fréquemment appelées « étiquettes RFID » (de l'Anglais « radio frequency identification »).

Les objets à vendre sont susceptibles d'être de toute nature, par exemple des aliments et/ou des boissons, des magazines, des appareils électroniques, ou encore des titres de transport.

La zone de vente 25 présente une longueur, mesurée selon la direction longitudinale X, comprise entre 1 mètre et 6 mètres, de préférence entre 2 m et 4 m.

La zone d'entrée 30 est également nommée «zone d'accès », ces deux termes étant considérés comme synonymes et utilisés indistinctement.

La zone d'entrée 30 est configurée pour relier la zone intermédiaire 35 à l'extérieur du compartiment de vente 15, par exemple à un autre compartiment ou à l'extérieur du véhicule 10. Par exemple, la zone d'entrée 30 est délimitée selon la direction longitudinale X par la zone intermédiaire 35 et par une porte reliant la zone d'entrée 30 à l'extérieur du compartiment 15.

La zone d'entrée 30 présente une longueur, mesurée selon la direction longitudinale X, comprise entre 1 mètre et 6 mètres, de préférence entre 2 m et 4 m.

La zone d'entrée 30 comporte, par exemple, au moins une table ou une console, prévue pour permettre aux passagers de poser les objets achetés. Optionnellement, la zone d'entrée 30 comporte au moins un siège.

La zone intermédiaire 35 comporte un premier passage 45 et un deuxième passage 50 décalés l'un par rapport à l'autre selon la direction transversale Y. La zone intermédiaire 35 comporte en outre une cloison 55 séparant les passages 45 et 50 l'un de l'autre, et optionnellement au moins un appareil de vente 62.

La zone intermédiaire 35 présente une longueur, mesurée selon la direction longitudinale X, comprise entre 1 mètre et 6 mètres, de préférence entre 2 m et 4 m.

Chacun du premier passage 45 et du deuxième passage 50 relie la zone d'entrée 30 à la zone de vente 25 pour permettre à un passager de traverser le passage 45, 50 considéré depuis la zone d'entrée 30 jusqu'à la zone de vente 25 et vice-versa. Chaque passage 45, 50 s'étend selon la direction longitudinale X.

Le premier passage 45 est prévu pour permettre aux passagers de sortir de la zone de vente 25 pour rejoindre la zone d'entrée 30. Par exemple, le premier passage 45 est configuré pour permettre aux passagers d'effectuer un paiement correspondant à l'achat d'un objet de la zone de vente 25.

Le premier passage 45 est délimité selon la direction transversale Y par une paroi latérale 20 et par la cloison 55.

Une distance entre la paroi latérale 20 et la cloison 55, mesurée selon la direction transversale Y, est par exemple comprise entre 40 % et 60 % de la largeur du compartiment 15.

En particulier, la distance entre la paroi latérale 20 et la cloison 55 est supérieure ou égale à 750 millimètres (mm), par exemple comprise entre 750 mm et 950 mm.

Le premier passage 45 comporte, par exemple, au moins un appareil de vente 62, par exemple une pluralité d'appareils de vente 62.

Le premier passage 45 comporte, en outre, optionnellement une indication, par exemple visuelle, selon laquelle le premier passage 45 est une sortie de la zone de vente 25. Cette indication peut, par exemple, prendre la forme d'un ou plusieurs panneaux indiquant qu'un trajet depuis la zone d'entrée 30 vers la zone de vente 25 à travers la premier passage 45 est interdit, ou encore comportant le mot « sortie ».

Le deuxième passage 50 comporte, par exemple, de manière similaire une indication selon laquelle le deuxième passage 50 doit servir d'entrée à la zone de vente 25.

De manière facultative, le deuxième passage 50 comporte un ou plusieurs présentoirs 40 comportant des objets à vendre.

Chaque appareil de vente 62 est, de manière connue en soi, configuré pour permettre à un usager d'effectuer un paiement correspondant à l'achat d'un des objets à vendre.

Par exemple, chaque appareil de vente 62 est configuré pour émettre le premier signal, pour détecter le deuxième signal émis par l'objet considéré en retour, et pour exiger que le passager présentant l'objet effectue une opération de paiement d'un montant dépendant du deuxième signal reçu.

L'opération de paiement comporte, par exemple, l'insertion de pièces de monnaie et/ou de billets dans un module de monétique correspondant, ou le paiement par carte bancaire du montant requis.

Lorsque l'appareil de vente 62 détermine que le paiement requis a été effectué, l'appareil de vente 62 est configuré pour émettre un signal radiofréquence de désactivation.

Le signal de désactivation est un signal prévu pour entraîner une désactivation de l'étiquette lorsque l'étiquette reçoit le signal de désactivation.

Il est entendu par « désactivation » qu'une étiquette désactivée n'émet pas le deuxième signal en réponse à la réception du premier signal.

La cloison 55 est configurée pour séparer le premier passage 45 du deuxième passage 50 selon la direction transversale Y.

La cloison 55 est, par exemple, parallélépipédique. Toutefois, la forme de la cloison 55 est susceptible de varier.

La cloison 55 présente une hauteur, mesurée selon une direction verticale Z perpendiculaire aux directions X et Y, supérieure ou égale à 1700 millimètres (mm). Par exemple, la cloison 55 s'étend du sol au plafond du compartiment 15.

La cloison 55 s'étend selon la direction longitudinale X entre une première extrémité 65 et une deuxième extrémité 70. La cloison 55 est délimitée selon la direction longitudinale X par la première extrémité 65 et la deuxième extrémité 70.

La cloison 55 présente une épaisseur, mesurée selon la direction transversale Y, comprise entre 10 millimètres (mm) et 50 mm.

La cloison 55 présente une longueur, mesurée selon la direction longitudinale X entre la première extrémité 65 et la deuxième extrémité 70, comprise entre 1 mètre (m) et 3 m, de préférence entre 1,5 m et 2 m.

La première extrémité 65 est en regard de la zone d'entrée 30. La deuxième extrémité est en regard de la zone de vente 25.

Chaque appareil de vente 62 est, par exemple, interposé selon la direction longitudinale X entre la deuxième extrémité 70 et la première extrémité 65.

La cloison 55 est, par exemple, opaque.

Il est entendu par « opaque » que la cloison 55 est configurée pour empêcher une lumière visible de traverser la cloison 55 depuis le premier passage 45 jusqu'au deuxième passage 50 et vice-versa.

Par exemple, la cloison 55 est réalisée sous la forme d'un panneau composite.

En variante, la cloison 55 est translucide.

Il est entendu par « translucide » que la cloison 55 est configurée pour permettre à une lumière visible de traverser la cloison 55 depuis le premier passage 45 jusqu'au deuxième passage 50 et vice-versa, mais que la cloison 55 transmet cette lumière de manière diffuse. En particulier, les objets vus à travers la cloison 55 apparaissent flous.

Par exemple, la cloison 55 est réalisée en verre, ou en polycarbonate.

La cloison 55 comporte un dispositif de détection 75.

Par exemple, la cloison 55 comporte au moins un panneau séparant les passages 45 et 50 l'un de l'autre selon la direction transversale Y, le dispositif de détection 75 étant reçu dans une cavité du panneau.

En variante, la cloison 55 comporte au moins deux panneaux décalés l'un par rapport à l'autre selon la direction transversale Y, le dispositif de détection 75 étant interposé entre les deux panneaux selon la direction transversale Y.

Le dispositif de détection 75 est, notamment, disposé à la première extrémité 65 de la cloison 55. Par exemple, une distance entre la deuxième extrémité 70 et le dispositif de détection 75 est supérieure ou égale à 90 % de la longueur de la cloison 55.

Une hauteur, mesurée entre le sol du compartiment 15 et le dispositif de détection 75 est, par exemple, comprise entre 0,2 mètres (m) et 1,70 m.

Le dispositif de détection 75 est prévu pour détecter un objet à vendre qu'un passager tenterait de faire sortir du compartiment de vente 15 sans l'avoir payé.

Le dispositif de détection 75 est, notamment, configuré pour émettre le premier signal.

Le premier signal est, par exemple, un signal présentant une fréquence comprise entre 125 kHz et 14 Mégahertz (MHz).

Le dispositif de détection 75 est configuré pour commander l'émission du troisième signal lorsque le dispositif de détection 75 reçoit le deuxième signal émis par une étiquette associée à un objet à vendre. Par exemple, le dispositif de détection 75 émet le troisième signal lorsque le dispositif de détection 75 reçoit le deuxième signal émis par une étiquette associée à un objet à vendre. Le dispositif de détection est par exemple propre à recevoir un deuxième signal émis par une étiquette associée à un objet à vendre, suite à l'émission du premier signal par ledit dispositif de détection, lorsque la distance entre l'objet et le dispositif de détection est inférieure à 2 m de préférence à 1 m.

Le troisième signal est un signal à destination d'une personne présente dans le compartiment de vente 15. Par exemple, le troisième signal est un signal sonore.

En variante ou en complément, le troisième signal comporte un signal visuel, par exemple l'émission d'une lumière telle qu'une lumière rouge.

Le dispositif de détection 75 comporte notamment, de manière connue, au moins une première antenne configurée pour émettre le premier signal, au moins une deuxième antenne configurée pour recevoir le deuxième signal, ces deux antennes étant optionnellement confondues, un module électronique de détection et un module d'émission.

Chaque appareil de vente 62 est, par exemple, interposé selon la direction longitudinale X entre la deuxième extrémité 70 et le dispositif de détection 75.

Une distance entre chaque appareil de vente 62 et le dispositif de détection 75, notamment entre chaque appareil de vente 62 et chacune des antennes du dispositif de détection 75, est supérieure ou égale à 1 mètre.

Chaque appareil de vente 62 est, notamment, fixé à la paroi 20 qui délimite le passage 45 et configuré pour qu'un passager utilisant l'appareil de vente 62 fasse face à cette paroi 20. Par exemple, un ou plusieurs écrans de l'appareil de vente 62 est perpendiculaire à la direction transversale Y.

Le module de détection est configuré pour commander l'alimentation de la première antenne avec un courant électrique prévu pour causer l'émission du premier signal par la première antenne.

Le module de détection est configuré pour recevoir de la deuxième antenne un courant électrique causé par la réception du deuxième signal par la deuxième antenne, et pour générer en réponse une commande d'émission à destination du module d'émission.

Le module de détection est, par exemple, réalisé sous la forme d'un ensemble de composants électroniques tels que des relais et/ou des microcontrôleurs, ou encore tels que des composants logiques programmables, des FPGA (de l'anglais « Field Programmable Gâte Array ») ou des circuits intégrés dédiés.

Le module de détection est, en variante, réalisé sous forme d'un logiciel, ou d'une brique logicielle, exécutable par un processeur. Dans ce cas, le dispositif de détection 75 comporte une unité de traitement de données comportant un processeur et une mémoire stockant des logiciels dont l'exécution forme le module de détection.

Le module d'émission est configuré pour émettre le troisième signal suite à la réception de la commande d'émission. Par exemple, le module d'émission comporte un haut-parleur ou un autre dispositif d'émission de sons, et optionnellement une ou plusieurs lampes.

En variante, le module d'émission est déporté par rapport au dispositif de détection 75. Par exemple, le module d'émission est au moins partiellement disposé hors de la cloison 55, par exemple fixé à une paroi latérale 20 ou à un plafond du compartiment 15.

La présence de la cloison 55 permet de limiter le temps passé par les passagers dans l'espace de vente, puisqu'elle sépare les deux passages longitudinaux 45 et 50 et incite donc les passagers à emprunter un parcours de circulation traversant l'un de ces passages 50 pour atteindre les présentoirs 40, puis longeant les parois de la zone de vente 25 pour sortir par l'autre passage 45, comme indiqué sur la figure 1 par une flèche. Ainsi, les risques de croisement ou de collision entre des passagers suivant des parcours différents est limité, et la durée moyenne nécessaire pour qu'un passager effectue un achat est donc limitée.

En outre, l'intégration du dispositif de détection 75 dans la cloison 55 permet de détecter efficacement d'éventuels vols, puisque les passagers doivent nécessairement s'approcher de la cloison pour sortir de la zone de vente à travers l'un des passages 45, 50, sans complexifier la structure du compartiment 15 et notamment sans nécessiter l'installation d'un dispositif de détection séparé.

La présence d'un ou plusieurs appareils de vente 62 dans le passage 45 permet là encore d'orienter les flux de passagers, puisque ce passage 45 est alors clairement identifié comme une sortie de la zone de vente 25.

En outre, le placement des appareils de vente 62 longitudinalement entre le dispositif de détection 75 et la deuxième extrémité 70 permettent encore de renforcer cette orientation préférentielle, puisque les passagers effectuant un paiement occupent alors la partie du passage 45 qui est comprise entre la cloison 55 et la paroi latérale 20, ce qui dissuade d'autant plus les passagers de tenter d'entrer dans la zone de vente par ce passage 45.

Le placement du dispositif 75 à la première extrémité 65 de la cloison permet d'utiliser les passages 45, 50 plus efficacement, en y plaçant des appareils de vente 62, des objets à vendre ou des présentoirs 40.

L'utilisation d'une cloison opaque ou translucide, notamment si elle s'étend au-delà de 1700 mm de haut, permet de dédier l'un des passages 45, 50 ou les deux à des actions nécessitant un certain degré de confidentialité, par exemple les opérations de paiement, puisque les détails de ces actions ne peuvent alors être observés à travers la cloison 55.

Le placement de la cloison 55 sensiblement au milieu du compartiment 15 permet d'orienter efficacement les flux de passagers. En particulier, une largeur du premier passage 45 comprise entre 750 mm et 950 mm permet d'éviter que plusieurs personnes entrent de front et ainsi causent une désorganisation des flux de passagers dans la zone de vente 25, tout en permettant le placement des appareils de vente 62 le cas échéant et en permettant à un passager effectuant des opérations de paiement de ne pas bloquer le passage 45.

En complément facultatif, le compartiment 15 comporte également au moins une caméra configurée pour acquérir des images de la zone de vente 25 et/ou de la zone intermédiaire 35 et un dispositif d'affichage prévu pour afficher les images acquises de manière à ce que des passagers présents dans le compartiment 15 puissent voir les images. Cela permet là aussi de limiter les risques de vol en dissuadant les voleurs potentiels.

## Revendications

1. Véhicule (10) de transport en commun comportant un compartiment de vente (15) s'étendant selon une direction longitudinale (X), le compartiment de vente (15) comportant une zone de vente (25), une zone d'accès (30) et une zone intermédiaire (35), la zone intermédiaire (35) étant interposée selon la direction longitudinale (X) entre la zone de vente (25) et la zone d'accès (30), la zone de vente (25) comprenant un ensemble de présentoirs (40) prévus pour accueillir des objets destinés à être vendus, chaque objet comportant une étiquette propre à recevoir un premier signal radiofréquence et à émettre en réponse un deuxième signal radiofréquence,
le véhicule (10) étant **caractérisé en ce que** la zone intermédiaire (35) comporte une cloison (55) s'étendant selon la direction longitudinale (X), la zone intermédiaire (35) comportant un premier passage (45) et un deuxième passage (50) décalés l'un par rapport à l'autre selon une direction transversale (Y) du compartiment de vente (15), chacun du premier (45) et du deuxième passage (50) reliant la zone d'accès (30) à la zone de vente (25), la cloison (55) séparant le premier passage (45) du deuxième passage (50) selon la direction transversale (Y), la cloison (55) comportant un dispositif de détection (75) configuré pour émettre le premier signal et pour commander l'émission d'un signal à destination d'un utilisateur lorsque le dispositif de détection (75) reçoit le deuxième signal émis par un des objets.

2. Véhicule selon la revendication 1, dans lequel la cloison (55) présente une première extrémité (65) et une deuxième extrémité (70) délimitant la cloison selon la direction longitudinale (X), la première extrémité (65) étant en regard de la zone d'accès (30), la deuxième extrémité (70) étant en regard de la zone de vente (25), le dispositif de détection (75) étant disposé à la première extrémité (65) de la cloison (55).

3. Véhicule selon la revendication 1 ou 2, dans lequel le premier passage (45) comporte au moins un appareil de vente (62) configuré pour permettre à un usager d'effectuer un paiement correspondant à l'achat d'un objet de la zone de vente (25).

4. Véhicule selon les revendications 2 et 3, dans lequel chaque appareil de vente (62) est interposé longitudinalement entre le dispositif de détection (75) et la deuxième extrémité (70) de la cloison (55).

5. Véhicule selon la revendication 3 ou 4, dans lequel chaque appareil de vente (62) est configuré pour désactiver l'étiquette d'un objet suite à l'achat de l'objet par un passager.

6. Véhicule selon l'une quelconque des revendications 1 à 5, dans lequel la cloison (55) présente une hauteur supérieure ou égale à 1700 millimètres, l'une des propriétés suivantes étant vérifiée :
- la cloison (55) est opaque, ou
- la cloison (55) est translucide.

7. Véhicule selon l'une quelconque des revendications 1 à 6, dans lequel le premier passage (45) est délimité selon la direction transversale (Y) par une paroi latérale (20) du compartiment de vente (15) et par la cloison (55), une distance entre la cloison (55) et la paroi latérale (20), mesurée selon la direction transversale (Y), étant comprise entre 40 pourcents et 60 pourcents d'une largeur du compartiment de vente (15).

8. Véhicule selon l'une quelconque des revendications 1 à 7, dans lequel le premier passage (45) est délimité selon la direction transversale (Y) par une paroi latérale (20) du compartiment de vente (15) et par la cloison (55), une distance entre la cloison (55) et la paroi latérale (20), mesurée selon la direction transversale (Y), étant comprise entre 750 millimètres et 950 millimètres.

9. Véhicule selon l'une quelconque des revendications 1 à 8, dans lequel une longueur de la cloison (55), mesurée selon la direction longitudinale (X), est comprise entre 1 mètre et 3 mètre, de préférence entre 1,5 mètre et 2 mètres.

## Patentansprüche

1. Fahrzeug (10) für den öffentlichen Verkehr, umfassend ein Verkaufsabteil (15), das sich in einer Längsrichtung (X) erstreckt, das Verkaufsabteil (15) umfassend einen Verkaufsbereich (25), einen Zugangsbereich (30) und einen Zwischenbereich (35) umfasst, wobei der Zwischenbereich (35) in Längsrichtung (X) zwischen dem Verkaufsbereich (25) und dem Zugangsbereich (30) eingefügt ist, der Verkaufsbereich (25) umfassend eine Gruppe von Auslagen (40), die dazu vorgesehen sind, Gegenstände aufzunehmen, die dazu bestimmt sind, verkauft zu werden, jeder Gegenstand umfassend ein Etikett, das geeignet ist, ein erstes Hochfrequenzsignal zu empfangen und als Antwort ein zweites Hochfrequenzsignal auszusenden,
wobei das Fahrzeug (10) **dadurch gekennzeichnet ist, dass** der Zwischenbereich (35) eine Trennwand (55) umfasst, die sich in Längsrichtung (X) erstreckt, wobei der Zwischenbereich (35) einen ersten Durchgang (45) und einen zweiten Durchgang (50) umfasst, die in einer Querrichtung (Y) des Verkaufsabteils (15) zueinander versetzt sind, wobei jeder von dem ersten (45) und dem zweiten Durchgang (50) den Zugangsbereich (30) mit dem Verkaufsbereich (25) verbindet, die Trennwand (55) den ersten Durchgang (45) von dem zweiten Durchgang (50) entlang der Querrichtung (Y) trennt, die Trennwand (55) umfassend eine Erfassungsvorrichtung (75), die konfiguriert ist, um das erste Signal auszusenden und das Aussenden eines Signals an einen Benutzer zu steuern, wenn die Erfassungsvorrichtung (75) das zweite Signal empfängt, das von einem der Objekte ausgesendet wird.

2. Fahrzeug nach Anspruch 1, wobei die Trennwand (55) ein erstes Ende (65) und ein zweites Ende (70) aufweist, die Trennwand in Längsrichtung (X) begrenzen, wobei das erste Ende (65) gegenüber dem Zugangsbereich (30) ist, das zweite Ende (70) gegenüber dem Verkaufsbereich (25) ist, wobei die Erfassungsvorrichtung (75) an dem ersten Ende (65) der Trennwand (55) angeordnet ist.

3. Fahrzeug nach Anspruch 1 oder 2, wobei der erste Durchgang (45) mindestens ein Verkaufsgerät (62) umfasst, das konfiguriert ist, um einem Benutzer zu ermöglichen, eine Zahlung zu leisten, die dem Kauf eines Gegenstands aus dem Verkaufsbereich (25) entspricht.

4. Fahrzeug nach Anspruch 2 und 3, wobei jedes Verkaufsgerät (62) in Längsrichtung zwischen der Erfassungsvorrichtung (75) und dem zweiten Ende (70) der Trennwand (55) eingefügt ist.

5. Fahrzeug nach Anspruch 3 oder 4, wobei jedes Verkaufsgerät (62) konfiguriert ist, um das Etikett eines Gegenstands nach dem Kauf des Gegenstands durch einen Fahrgast zu deaktivieren.

6. Fahrzeug nach einem der Ansprüche 1 bis 5, wobei die Trennwand (55) eine Höhe von 1700 Millimetern oder mehr aufweist, wobei eine der folgenden Eigenschaften überprüft wird:
- die Trennwand (55) ist undurchsichtig, oder
- die Trennwand (55) ist lichtdurchlässig.

7. Fahrzeug nach einem der Ansprüche 1 bis 6, wobei der erste Durchgang (45) in Querrichtung (Y) durch eine Seitenwand (20) des Verkaufsraums (15) und durch die Trennwand (55) begrenzt ist, wobei ein Abstand zwischen der Trennwand (55) und der Seitenwand (20), gemessen in Querrichtung (Y), zwischen 40 Prozent und 60 Prozent einer Breite des Verkaufsraums (15) ist.

8. Fahrzeug nach einem der Ansprüche 1 bis 7, wobei der erste Durchgang (45) in Querrichtung (Y) durch eine Seitenwand (20) des Verkaufsraums (15) und durch die Trennwand (55) begrenzt ist, wobei ein Abstand zwischen der Trennwand (55) und der Seitenwand (20), gemessen in Querrichtung (Y), zwischen 750 Millimetern und 950 Millimetern ist.

9. Fahrzeug nach einem der Ansprüche 1 bis 8, wobei eine Länge der Trennwand (55), gemessen in der Längsrichtung (X), zwischen 1 Meter und 3 Meter, vorzugsweise zwischen 1,5 Meter und 2 Meter, ist.

## Claims

1. A public transport vehicle (10) comprising a sales compartment (15) extending in a longitudinal direction (X), the sales compartment (15) comprising a sales area (25), an access area (30) and an intermediate area (35), the intermediate area (35) being interposed in the longitudinal direction (X) between the sales area (25) and the access area (30), the sales area (25) comprising a set of displays (40) designed to accommodate objects intended to be sold, each object comprising a label suitable for receiving a first radio frequency signal and for transmitting a second radio frequency signal in response,
the vehicle (10) being **characterised in that** the intermediate area (35) comprises a partition (55) extending in the longitudinal direction (X), the intermediate area (35) comprising a first passage (45) and a second passage (50) offset from each other in a transverse direction (Y) of the sales compartment (15), each of the first (45) and second (50) passages connecting the access area (30) to the sales area (25), the partition (55) separating the first passage (45) from the second passage (50) in the transverse direction (Y), the partition (55) comprising a detection device (75) configured to transmit the first signal and to control the transmission of a signal to a user when the detection device (75) receives the second signal transmitted by one of the objects.

2. The vehicle according to claim 1, wherein the partition (55) has a first end (65) and a second end (70) delimiting the partition in the longitudinal direction (X), the first end (65) facing the access area (30), the second end (70) facing the sales area (25), the detection device (75) being arranged at the first end (65) of the partition (55).

3. The vehicle according to claim 1 or 2, wherein the first passageway (45) comprises at least one vending apparatus (62) configured to allow a user to make a payment corresponding to the purchase of an item from the sales area (25).

4. The vehicle according to claims 2 and 3, wherein each vending apparatus (62) is interposed longitudinally between the detection device (75) and the second end (70) of the partition (55).

5. The vehicle according to claim 3 or 4, wherein each vending apparatus (62) is configured to deactivate the tag of an item following the purchase of the item by a passenger.

6. The vehicle according to any one of claims 1 to 5, wherein the partition (55) has a height greater than or equal to 1700 millimetres, one of the following properties being met:
- the partition (55) is opaque, or
- the partition (55) is translucent.

7. The vehicle according to any one of claims 1 to 6, wherein the first passage (45) is bounded in the transverse direction (Y) by a side wall (20) of the sales compartment (15) and by the partition (55), a distance between the partition (55) and the side wall (20), measured in the transverse direction (Y), being between 40 percent and 60 percent of a width of the sales compartment (15).

8. The vehicle according to any one of claims 1 to 7, wherein the first passage (45) is bounded in the transverse direction (Y) by a side wall (20) of the sales compartment (15) and by the partition (55), a distance between the partition (55) and the side wall (20), measured in the transverse direction (Y), being between 750 millimetres and 950 millimetres.

9. The vehicle according to any one of claims 1 to 8, wherein a length of the partition (55), measured along the longitudinal direction (X), is between 1 metre and 3 metres, preferably between 1.5 metres and 2 metres.
